(19) Europäisches Patentamt
European Patent Office
Office européen des brevets

(11) EP 4 458 919 A1

(12) **EUROPEAN PATENT APPLICATION**

(43) Date of publication:
**06.11.2024 Bulletin 2024/45**

(21) Application number: **24164001.0**

(22) Date of filing: **15.03.2024**

(51) International Patent Classification (IPC):
***C09J 7/24*** *(2018.01)*

(52) Cooperative Patent Classification (CPC):
**C09J 7/24;** C08F 214/18; C09J 2203/33; C09J 2301/414; C09J 2427/006; H01M 4/623; H01M 50/183

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.05.2023 KR 20230058751**

(71) Applicant: **Samsung SDI Co., Ltd.**
**Yongin-si, Gyeonggi-do 17084 (KR)**

(72) Inventors:
- **SEINO, Hiroshi**
  **17084 Yongin-si (KR)**
- **AHN, Jeongchull**
  **17084 Yongin-si (KR)**
- **KIM, Sanghyung**
  **17084 Yongin-si (KR)**

(74) Representative: **Marks & Clerk LLP**
**15 Fetter Lane**
**London EC4A 1BW (GB)**

(54) **ADHESIVE TAPE FOR RECHARGEABLE BATTERY AND RECHARGEABLE BATTERY INCLUDING SAME**

(57) An adhesive tape for a rechargeable battery and a rechargeable lithium battery including the same are provided. The adhesive tape includes a substrate and an adhesive layer on a side of the substrate, where the substrate includes a copolymer including a first structural unit derived from a first monomer including fluorine, a second structural unit derived from a second monomer different from the first monomer and including fluorine, and a third structural unit derived from a third monomer that is a carboxyl-containing monomer.

FIG. 2

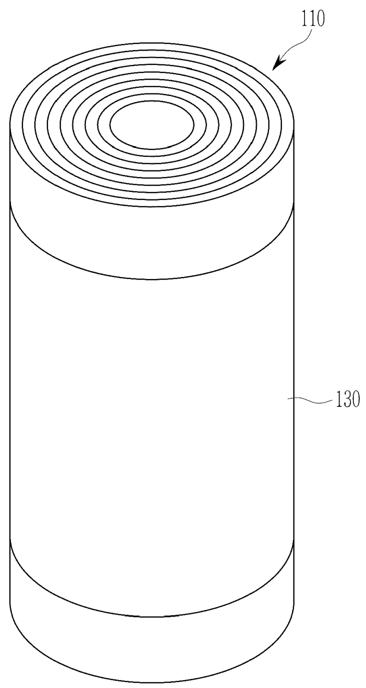


EP 4 458 919 A1

## Description

## BACKGROUND

### 1. Field

One or more embodiments of the present disclosure relate to an adhesive tape for a rechargeable battery and a rechargeable battery including the adhesive tape.

### 2. Description of the Related Art

Secondary batteries, for example, rechargeable lithium batteries, are attracting attention as power sources for various suitable electronic devices because of their relatively high discharge voltage and high energy density.

These rechargeable lithium batteries have a structure that positive and negative electrodes are disposed to face each other, and an electrolyte is provided or impregnated (or charged) thereinto, wherein a separator is disposed between the positive and negative electrodes to prevent or reduce a short circuit.

An electrode assembly including (e.g., consisting of) the positive and negative electrodes and the separator therebetween is housed with the electrolyte in a case of the rechargeable lithium battery. The electrode assembly may have a stacked or wound structure obtained by simply stacking or winding the electrodes manufactured to have a strip (or jellyroll) shape with the separator. In a structure of the rechargeable lithium battery, the structure of the electrode assembly needs to or should be fixed to the case by attaching a tape. However, the tape utilized for the fixing may deform or crack the structure of the electrode assembly, causing a problem and/or issue in terms of safety and/or performance of the battery.

## SUMMARY

One or more aspects of embodiments of the present disclosure are directed toward an adhesive tape for a rechargeable battery that may improve the safety of the battery.

One or more aspects of embodiments of the present disclosure are directed toward a rechargeable battery including the adhesive tape.

Additional aspect(s) may be set forth in part in the description which follows and, in part, will be apparent from the description, or may be learned by practice of the presented embodiments of the disclosure.

However, the present disclosure is not limited to the above-mentioned aspects but may be variously expanded without departing from the technical idea of the present disclosure.

According to one or more embodiments of the present disclosure, an adhesive tape for a rechargeable battery includes a substrate and an adhesive layer on a side of the substrate, wherein the substrate includes a copolymer including a first structural unit derived from a first monomer including fluorine, a second structural unit derived from a second monomer different from the first monomer and including fluorine, and a third structural unit derived from a third monomer that is a carboxyl-containing monomer.

In one or more embodiments, the second structural unit may be included in an amount of about 7 mol% to about 40 mol% based on a total weight, 100 mol%, of the copolymer.

In one or more embodiments, the third structural unit may be included in an amount of about 0.05 mol% to about 2.5 mol% based on a total weight, 100 mol%, of the copolymer.

The first monomer may be vinylidene fluoride.

The second monomer may be hexafluoropropylene.

The third monomer may include (meth)acrylic acid or a derivative thereof, maleic acid or a derivative thereof, vinyl benzoic acid or a derivative thereof, an anhydride thereof, or any combination thereof.

In one or more embodiments, the third monomer may include at least one selected from among maleic acid, maleic anhydride, maleic acid monoester, maleic acid monoamide, acrylic acid, methacrylic acid, and 4-vinyl benzoic acid.

In one or more embodiments, the copolymer may further include a fourth structural unit derived from a fourth monomer selected from among an ethylene fluoride derivative, an acrylic acid derivative, an ethylene derivative, and one or more combinations thereof.

In one or more embodiments, the fourth monomer may include at least one selected from among chlorotrifluoroethylene, tetrafluoroethylene, perfluoroalkyl vinyl ether, acrylic acid ester, ethylene, propylene, vinyl acetate, and maleic acid diester.

The fourth structural unit may be included in an amount of about 0.05 mol% to about 0.15 mol% based on a total weight, 100 mol%, of the copolymer.

A melting point of the copolymer may be greater than or equal to about 40 °C and less than or equal to about

155 °C.

An electrolyte absorption amount of the substrate may be greater than or equal to about 50 wt% of a weight of the substrate.

The adhesive layer may include an adhesive selected from among an acrylic adhesive, a rubber adhesive, a silicone adhesive, a hot melt adhesive, and one or more combinations thereof.

According to one or more embodiments of the present disclosure, a rechargeable battery includes an electrode assembly including a negative electrode, a positive electrode, and a separator between the negative electrode and the positive electrode, an electrolyte in which the electrode assembly is immersed, a case accommodating the electrode assembly and the electrolyte, and the adhesive tape for the rechargeable battery attached to the electrode assembly and disposed (e.g., arranged and/or affixed) between the electrode assembly and the case.

At least some of the above and other features of the invention are set out in the claims.

Other embodiments may be included in the following detailed description.

According to one or more embodiments, an adhesive tape for a rechargeable battery that can improve the safety of a battery and a rechargeable battery including the adhesive tape is provided.

The effects of the present disclosure are not limited to the effects mentioned herein, and other effects will be clearly understood by those skilled in the art from the description of the claims.

## BRIEF DESCRIPTION OF THE DRAWINGS

The accompanying drawings are included to provide a further understanding of the present disclosure, and are incorporated in and constitute a part of this specification. The drawings illustrate example embodiments of the present disclosure and, together with the description, serve to explain principles of present disclosure.

FIG. 1 is a schematic view showing a rechargeable battery according to one or more embodiments of the present disclosure.

FIG. 2 is a schematic view showing an electrode assembly and adhesive tape for a rechargeable battery of FIG. 1 according to one or more embodiments of the present disclosure.

## DETAILED DESCRIPTION

The present disclosure may be modified in many alternate forms, and thus specific embodiments will be exemplified in the drawings and described in more detail. It should be understood, however, that it is not intended to limit the present disclosure to the particular forms disclosed, but rather, is intended to cover all modifications, equivalents, and alternatives falling within the scope of the present disclosure.

Hereinafter, embodiments of the present disclosure are described in more detail. However, these embodiments are mere examples, the present disclosure is not limited thereto and the present disclosure is defined by the scope of claims. The terminology utilized herein is utilized to describe embodiments only, and is not intended to limit the present disclosure. The singular expression includes the plural expression unless the context clearly dictates otherwise.

The term "combination(s) thereof" as utilized herein may refer to a mixture, laminate, composite, copolymer, alloy, blend, reaction product, and/or the like of constituents.

It should be understood that terms such as "comprise(s)/comprising," "include(s)/including," or "have/has/having" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., may be exaggerated for clarity and like reference numerals designate like elements throughout the present disclosure, and duplicative descriptions thereof may not be provided for conciseness. It will be understood that when an element such as a layer, film, region, or substrate is referred to as being "on" another element, it may be directly on the other element or intervening elements may also be present. In contrast, when an element is referred to as being "directly on" another element, there are no intervening elements present therebetween.

"Thickness" may be measured, for example, with a micrometer or through an image taken with an optical microscope such as a scanning electron microscope.

An average size may be an average particle diameter/size (D50), and unless otherwise defined herein, the average particle diameter/size (D50) refers to the diameter/size of a particle with a cumulative volume of about 50 volume% in a particle size distribution of particles.

The average particle diameter/size (D50) may be measured by a method well suitable (known) to those skilled in the art, for example, by a particle size analyzer, or by a transmission electron microscopic image, or a scanning electron microscopic image. In some embodiments, a dynamic light-scattering measurement device may be utilized to

perform a data analysis, and the number of particles is counted for each particle size range. From this, the average particle diameter/size (D50) value may be easily obtained through a calculation. Also, when particles are spherical, "diameter" or "size" indicates a particle diameter, and when the particles are non-spherical, the "diameter" or "size" indicates a major axis length or an average major axis length of the particles.

According to one or more embodiments of the present disclosure, an adhesive tape for a rechargeable battery includes a substrate and an adhesive layer on a (e.g., one) surface of the substrate.

The substrate includes a copolymer including a first structural unit derived from a first monomer including fluorine, a second structural unit derived from a second monomer different from the first monomer and including fluorine, and a third structural unit derived from a third monomer that is a carboxyl-containing monomer.

In one or more embodiments, the first monomer including fluorine may be vinylidene fluoride. In some embodiments, the second monomer differing from the first monomer and including fluorine may be hexafluoropropylene. In some embodiments, the third monomer, which is a carboxyl-containing monomer, may be (meth)acrylic acid or a derivative thereof, maleic acid or a derivative thereof, vinyl benzoic acid or a derivative thereof, an anhydride thereof, or any combination thereof.

A resin including a first structural unit derived from vinylidene fluoride, the first monomer, which is in general a resin having excellent or suitable electrochemical stability, has swelling characteristics if (e.g., when) absorbing an electrolyte, and thus has been utilized as a substrate for an adhesive tape for a rechargeable battery. In other words, the resin may not only not be dissolved in the electrolyte due to the excellent or suitable electrochemical stability but also swollen itself, which generates wrinkles and changes thickness to fill a gap between an electrode assembly and a case inside the case of a rechargeable battery and resultantly, prevent or reduce movement of the electrode assembly. Accordingly, unlike a resin dissolved in the electrolyte, the resin is not dissolved in the electrolyte and thus may be stably utilized inside the electrode assembly without affecting battery characteristics.

However, a polymer including the first structural unit alone has a problem of insufficiently expanding, if (e.g., when) immersed in an electrolyte. In some embodiments, a substrate itself may not be sufficiently softened or deformed, wherein if (e.g., when) utilized for a rechargeable battery, there may be cracks on an electrode due to different expansion degrees of where the adhesive tape is attached and where not attached, if (e.g., when) the electrode expands.

Accordingly, in order to sufficiently soften the substrate of the adhesive tape, in one or more embodiments, the copolymer included in the substrate may include a second structural unit derived from hexafluoropropylene, the second monomer. The hexafluoropropylene may be copolymerized to increase the electrolyte absorption amount and improve softening of the substrate after the absorption. In some embodiments, the copolymer, which is gelled, if (e.g., when) absorbing the electrolyte, may allow expansion of the electrode without resistance during the expansion of the electrode, and thus prevent or reduce cracks on the electrode.

In one or more embodiments, a third structural unit derived from the third monomer containing carboxyl is included to improve the adhesion of the case with the electrode assembly if (e.g., when) the copolymer is swollen by the electrolyte in the case. In other words, when the copolymer of the substrate is immersed in the electrolyte and gelled, the electrode assembly may be slipped inside the case, deteriorating stability, but the copolymer includes the third structural unit to improve adhesion of the gelled portion and metals (case and electrode assembly) and prevent or reduce the slipping between the electrode assembly and the case, resultantly improving vibration resistance.

The third monomer may be a compound having an unsaturated bond and containing at least one carboxyl group or an anhydride thereof. For example, in one or more embodiments, the third monomer may include (meth)acrylic acid or a derivative thereof, maleic acid or a derivative thereof, vinyl benzoic acid or a derivative thereof, an anhydride thereof, or any combination thereof. For example, in some embodiments, the third monomer may include maleic acid, maleic anhydride, maleic acid monoester (e.g., monomethyl maleate), maleic acid monoamide, acrylic acid, methacrylic acid, 4-vinyl benzoic acid, or any combination thereof.

In one or more embodiments, the copolymer, for example, may have a structure of having the first structural unit as a main skeleton and the second and third structural units randomly distributed. For example, in some embodiments, the copolymer may be an alternating copolymer that the first, second, and third structural units are alternately distributed, a random copolymer that the first, second, and third structural units are randomly distributed, a graft copolymer that some structural units are grafted, and/or the like, but embodiments of the present disclosure are not limited thereto.

For example, in one or more embodiments, the first structural unit may be included in an amount of about 50 mol% or more based on a total weight, 100 mol%, of the copolymer. However, the first structural unit, which is the main skeleton of the copolymer, may be included in a balance amount excluding the other structural units described later in the copolymer.

For example, in one or more embodiments, the second structural unit may be included in an amount of about 7 mol% to about 40 mol%, or about 8 mol% to about 40 mol% based on a total weight, 100 mol%, of the copolymer. For example, in one or more embodiments, the second structural unit may be included in an amount of about 7 mol% to about 25 mol% based on a total weight, 100 mol%, of the copolymer. If (e.g., when) the second structural unit is included in a ratio (e.g., amount) of less than about 8 mol%, there may be no sufficient effect of suppressing the cracks due to a

slower gelation rate and insufficient softening property. If (e.g., when) the second structural unit is included in a ratio (e.g., amount) of greater than about 40 mol%, which may excessively reduce a melting point of resin to increase tackiness of the resin, the resin may not only be difficult to form into a film shape, but processability may also be deteriorated, if (e.g., when) inserting an electrode assembly into a case.

For example, in one or more embodiments, the third structural unit may be included in an amount of about 0.05 wt% to about 2.5 mol%, or about 0.1 wt% to about 2.0 mol% based on a total weight, 100 mol%, of the copolymer. If (e.g., when) the third structural unit is included in a ratio (e.g., amount) of less than about 0.1 mol%, there may be no substantial adhesion effect with the metals. If (e.g., when) the ratio is greater than about 2.0 mol%, of which a resin exhibits tackiness if (e.g., when) formed into a film and which may cause blocking of the film, there may be a problem of having difficulties in applying it for producing products.

In one or more embodiments, the copolymer obtained by copolymerizing the first, second, and third monomers may have a melting point of about 40 °C to about 155 °C. If (e.g., when) the melting point is less than about 40 °C, if (e.g., when) a resin of the copolymer is formed into a film, the film has a decrease in strength and may not be applied as a substrate of an adhesive tape for a rechargeable battery, and in addition, the resin has an increase in tackiness and may be difficult to form even into a film shape. If (e.g., when) the melting point is greater than about 155 °C, it is difficult to secure fast gelling, which is not desirable. In one or more embodiments, an adhesive tape for a rechargeable battery including a substrate including the copolymer may also be applied to electrode ends or circumference of a jelly-roll shaped electrode assembly of a cylindrical battery or a prismatic electrode assembly of a pouch-type or kind or prismatic battery. Herein, because the cylindrical battery cell has no particular process of heating and compressing the jelly-roll shaped electrode assembly, the heating process requires relatively less time and lower temperature. In this environment, the desired or suitable crack prevention effect may be achieved, only if (e.g., when) the substrate more quickly absorbs an electrolyte and is gelled. Accordingly, the melting point of the copolymer may be controlled or selected to be less than about 155 °C to achieve the rapid gelling and softening effects.

In one or more embodiments, the copolymer may have a weight average molecular weight of about 50,000 g/mol to about 1,500,000 g/mol, or within the range, for example, a weight average molecular weight of about 200,000 g/mol to about 800,000 g/mol. In some embodiments, the weight average molecular weight may be determined by general techniques such as gel permeation chromatography, static light scattering, osmotic pressure, or the like.

In one or more embodiments, a film obtained from the copolymer, that is, a substrate of an adhesive tape for a rechargeable battery, may have an electrolyte absorption amount of about 50 wt% or more of a weight of the substrate. Herein, the electrolyte absorption amount may be measured according to ISO 1817 (the entire content of which is incorporated herein by reference). For example, the electrolyte absorption amount may be obtained by measuring a weight change ratio before and after immersing a circular punched film-shaped substrate with a diameter of about 20 mm in the electrolyte at about 60 °C for about 24 hours. If (e.g., when) the electrolyte absorption amount is less than about 50 wt% of the weight of the substrate, that is, if (e.g., when) the electrolyte is not sufficiently absorbed, the crack suppression effect may not be obtained due to increased substrate strength and insufficient softening.

In one or more embodiments, the copolymer may further include a fourth structural unit derived from a fourth monomer selected from among an ethylene fluoride derivative, an acrylic acid derivative, and an ethylene derivative.

For example, in some embodiments, the fourth monomer may include chlorotrifluoroethylene (CTFE), tetrafluoroethylene (TFE), perfluoroalkyl vinyl ether, acrylic acid ester (e.g., ethyl acrylate), ethylene, propylene, vinyl acetate, maleic acid diester, or any combination thereof.

The fourth structural unit may be included in an amount of about 0.05 mol% to about 0.15 mol% based on a total weight, 100 mol%, of the copolymer.

The fourth structural unit may further improve gelling characteristics and also impart functionalities such as fluidity and/or the like other than the gelling.

In one or more embodiments, an adhesive layer is formed on at least one surface of the substrate obtained from the copolymer. The adhesive layer is attached to a portion or the entire outermost surface of the electrode assembly to fix the wound or stacked state of the electrode assembly. The adhesive layer may be thinner than the substrate. For example, in some embodiments, a thickness of the adhesive layer may be greater than or equal to about 1 μm and less than or equal to about 100 μm, and in some embodiments, less than or equal to about 30 μm. In terms of suppressing cracks, the thinner, the better. The adhesive layer may include an adhesive selected from among an acrylic adhesive, a rubber adhesive, a silicone adhesive, a hot melt adhesive, or any combination thereof. In one or more embodiments, the adhesive, even though any type or kind of adhesive may be selected, particularly does not affect the gelling effect and/or the like of the substrate according to the present example embodiments and may be properly selected without particular restrictions.

According to one or more embodiments of the present disclosure, a rechargeable battery includes a negative electrode, a positive electrode, a separator between the negative electrode and the positive electrode, and an electrolyte.

The negative electrode may include a negative electrode current collector and a negative active material layer on the negative electrode current collector and including a negative active material.

The negative active material may be a material capable of reversibly intercalating/deintercalating lithium ions, a lithium metal, a lithium metal alloy, a material capable of doping and dedoping lithium, and/or a transition metal oxide.

Non-limiting examples of materials that may reversibly intercalate/deintercalate lithium ions may include a carbon material, for example, a carbon-based negative active material commonly utilized in a lithium rechargeable battery. Non-limiting examples of carbon-based negative active materials may include crystalline carbon, amorphous carbon, and/or a combination thereof. Non-limiting examples of the crystalline carbon may be graphite such as unspecified-shaped, sheet-shaped, flake-shaped, spherical-shaped, and/or fiber-shaped natural graphite and/or artificial graphite. Non-limiting examples of the amorphous carbon may be soft carbon or hard carbon, a mesophase pitch carbonized product, calcined coke, and/or the like.

The lithium metal alloy may be an alloy of lithium and one or more metals selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material being capable of doping/dedoping lithium may include Si, $SiO_x$ ($0 < x < 2$), a Si-Q alloy (wherein Q may be an element selected from among an alkali metal, an alkaline-earth metal, a Group 13 element, a Group 14 element, a Group 15 element, a Group 16 element, a transition metal, a rare earth element, and one or more combinations thereof, but not Si), a Si-carbon composite, Sn, $SnO_2$, a Sn-R alloy (wherein R is an element selected from among an alkali metal, an alkaline-earth metal, a Group 13 element, a Group 14 element, a Group 15 element, a Group 16 element, a transition metal, a rare earth element, and one or more combinations thereof, but not Sn), a Sn-carbon composite, and/or the like. In some embodiments, at least one of these may be mixed with $SiO_2$. The elements Q and R may each independently be selected from among magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), germanium (Ge), phosphorus (P), arsenic (As), antimony (Sb), bismuth (Bi), sulfur (S), selenium (Se), tellurium (Te), polonium (Po), and one or more combinations thereof.

The transition metal oxide may be lithium titanium oxide.

The negative active material according to one or more embodiments may include a Si-C composite including a Si-based active material and a carbon-based active material.

The Si-based active material may be Si, $SiO_x$ ($0 < x < 2$), a Si-Q alloy (wherein Q may be an element selected from among an alkali metal, an alkaline-earth metal, a Group 13 element, a Group 14 element, a Group 15 element, a Group 16 element, a transition metal, a rare earth element, and one or more combinations thereof, but not Si), or any combination thereof.

The Si-based active material may be in the form of particles and have an average particle diameter of about 50 nm to about 200 nm.

If (e.g., when) the average particle diameter of the Si-based active material is within the above range, volume expansion occurring during charging and discharging may be suppressed or reduced, and a break in a conductive path due to particle crushing during charging and discharging may be prevented or reduced.

The Si-based active material may be included in an amount of about 1 wt% to about 60 wt%, for example about 3 wt% to about 60 wt%, based on a total weight of the Si-C composite.

The negative active material according to one or more embodiments may further include crystalline carbon along with the aforementioned Si-C composite.

If (e.g., when) the negative active material includes a Si-C composite and crystalline carbon, the Si-C composite and crystalline carbon may be included in the form of a mixture, in which case the Si-C composite and crystalline carbon may be included in a weight ratio of about 1:99 to about 50:50. In some embodiments, the SiC composite and crystalline carbon may be included in a weight ratio of about 5:95 to about 20:80.

The crystalline carbon may include, for example, graphite, and, for example, may include natural graphite, artificial graphite, or a mixture thereof.

An average particle diameter of the crystalline carbon (in the form of particles) may be about 5 μm to about 30 μm.

In the present disclosure, the average particle diameter may be an average particle size (D50) at 50% by volume in a cumulative size-distribution curve. The average particle size (D50) may be measured by a method well suitable (known) to those skilled in the art, for example, by a particle size analyzer, or by a transmission electron microscopic image, or a scanning electron microscopic image. In some embodiments, a dynamic light-scattering measurement device may be utilized to perform a data analysis, and the number of particles is counted for each particle size range. From this, the average particle diameter/size (D50) value may be easily obtained through a calculation.

In one or more embodiments, the Si-C composite may further include a shell around (e.g., surrounding) a surface of the Si-C composite, and the shell may include amorphous carbon. A thickness of the shell may be about 5

nm to about 100 nm.

The amorphous carbon may include soft carbon, hard carbon, a mesophase pitch carbonized product, a sintered coke, or one or more mixtures thereof.

The amorphous carbon may be included in an amount of about 1 to about 50 parts by weight, for example, about 5 to about 50 parts by weight, or about 10 to about 50 parts by weight, based on 100 parts by weight of the carbon-based active material.

If (e.g., when) utilizing the Si-C composite as a negative active material, a problem of increased resistance may occur, but if (e.g., when) utilized with an electrolyte including the additive of Chemical Formula 1 according to one or more embodiments, the increase in resistance may be more effectively suppressed or reduced.

In one or more embodiments, the negative active material layer includes a negative active material and a binder, and may optionally further include a conductive material.

In the negative active material layer, the negative active material may be included in an amount of about 95 wt% to about 99 wt% based on a total weight of the negative active material layer. In the negative active material layer, an amount of the binder may be about 1 wt% to about 5 wt% based on a total weight of the negative active material layer. If (e.g., when) the negative active material layer includes a conductive material, the negative active material layer includes about 90 wt% to about 98 wt% of the negative active material, about 1 wt% to about 5 wt% of the binder, and about 1 wt% to about 5 wt% of the conductive material, based on a total weight of the negative active material layer.

The binder improves binding properties of negative active material particles with one another and with the negative electrode current collector. The binder may include a non-water-soluble binder, a water-soluble binder, or a combination thereof.

The non-water-soluble binder (e.g., water-insoluble binder) may include ethylene-propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamideimide, polyimide, or any combination thereof.

The water-soluble binder may include a styrene-butadiene rubber, an acrylated styrene-butadiene rubber, an acrylonitrile-butadiene rubber, an acrylic rubber, a butyl rubber, a fluorine rubber, an ethylene oxide-containing polymer, polyvinylpyrrolidone, polyepichlorohydrin, polyphosphazene, an ethylene-propylene-diene copolymer, polyvinylpyridine, chlorosulfonated polyethylene, latex, a polyester resin, an acrylic resin, a phenolic resin, an epoxy resin, polyvinyl alcohol, or any combination thereof.

If (e.g., when) the water-soluble binder is utilized as a binder for the negative electrode, a cellulose-based compound may be further utilized to provide viscosity as a thickener. The cellulose-based compound may include one or more of carboxymethyl cellulose, hydroxypropylmethyl cellulose, methyl cellulose, or alkali metal salts thereof. The alkali metals may be Na, K, or Li. Such a thickener may be included in an amount of about 0.1 parts by weight to about 3 parts by weight based on 100 parts by weight of the negative active material.

The conductive material may be included to provide electrode conductivity, and any electrically conductive material may be utilized as a conductive material unless it causes a chemical change. Non-limiting examples of the conductive material may include a carbon-based material such as natural graphite, artificial graphite, carbon black, acetylene black, ketjen black, denka black, carbon fiber, and/or the like; a metal-based material of a metal powder or a metal fiber including copper, nickel, aluminium, silver, and/or the like; a conductive polymer such as a polyphenylene derivative; and/or one or more mixtures (and/or combinations) thereof.

The negative electrode current collector may include one selected from among a copper foil, a nickel foil, a stainless steel foil, a titanium foil, a nickel foam, a copper foam, a polymer substrate coated with a conductive metal, and one or more combinations thereof, but embodiments of the present disclosure are not limited thereto.

The positive electrode includes a positive electrode current collector and a positive active material layer on the positive electrode current collector and including a positive active material. A compound capable of intercalating and deintercalating lithium (lithiated intercalation compound) may be utilized as the positive active material. For example, in some embodiments, one or more composite oxides of a metal selected from cobalt, manganese, nickel, and any combination thereof, and lithium may be utilized. In one or more embodiments, a compound represented by any one of the following chemical formulas may be utilized: $Li_aA_{1-b}X_bD_2$ ($0.90 \le a \le 1.8$, $0 \le b \le 0.5$); $Li_aA_{1-b}X_bO_{2-c}D_c$ ($0.90 \le a \le 1.8$, $0 \le b \le 0.5$, $0 \le c \le 0.05$); $Li_aE_{1-b}X_bO_{2-c}D_c$ ($0.90 \le a \le 1.8$, $0 \le b \le 0.5$, $0 \le c \le 0.05$); $Li_aE_{2-b}X_bO_{4-c}D_c$ ($0.90 \le a \le 1.8$, $0 \le b \le 0.5$, $0 \le c \le 0.05$); $Li_aNi_{1-b-c}Co_bX_cD_\alpha$ ($0.90 \le a \le 1.8$, $0 \le b \le 0.5$, $0 \le c \le 0.5$, $0 < \alpha \le 2$); $Li_aNi_{1-b-c}Co_bX_cO_{2-\alpha}T_\alpha$ ($0.90 \le a \le 1.8$, $0 \le b \le 0.5$, $0 \le c \le 0.5$, $0 < \alpha < 2$); $Li_aNi_{1-b-c}Co_bX_cO_{2-\alpha}T_2$ ($0.90 \le a \le 1.8$, $0 \le b \le 0.5$, $0 \le c \le 0.5$, $0 < \alpha < 2$); $Li_aNi_{1-b-c}Mn_bX_cD_\alpha$ ($0.90 \le a \le 1.8$, $0 \le b \le 0.5$, $0 \le c \le 0.5$, $0 < \alpha \le 2$); $Li_aNi_{1-b-c}Mn_bX_cO_{2-\alpha}T_\alpha$ ($0.90 \le a \le 1.8$, $0 \le b \le 0.5$, $0 \le c \le 0.5$, $0 < \alpha < 2$); $Li_aNi_{1-b-c}Mn_bX_cO_{2-\alpha}T_2$ ($0.90 \le a \le 1.8$, $0 \le b \le 0.5$, $0 \le c \le 0.5$, $0 < \alpha < 2$); $Li_aNi_bE_cG_dO_2$ ($0.90 \le a \le 1.8$, $0 \le b \le 0.9$, $0 \le c \le 0.5$, $0.001 \le d \le 0.1$); $Li_aNi_bCo_cMn_dG_eO_2$ ($0.90 \le a \le 1.8$, $0 \le b \le 0.9$, $0 \le c \le 0.5$, $0 \le d \le 0.5$, $0.001 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $QO_2$; $QS_2$; $LiQS_2$; $V_2O_5$; $LiV_2O_5$; $LiZO_2$; $LiNiVO_4$; $Li_{(3-f)}J_2(PO_4)_3$ ($0 \le f \le 2$); $Li_{(3-f)}Fe_2(PO_4)_3$($0 \le f \le 2$); $Li_aFePO_4$($0.90 \le a \le 1.8$).

In the above chemical formulas, A may be selected from among Ni, Co, Mn, and one or more combinations thereof; X may be selected from among Al, Ni, Co, Mn, Cr, Fe, Mg, Sr, V, a rare earth element, and one or more combinations thereof; D may be selected from among O, F, S, P, and one or more combinations thereof; E may be selected from among Co, Mn, and a combination thereof; T may be selected from among F, S, P, and one or more combinations thereof; G may be selected from among Al, Cr, Mn, Fe, Mg, La, Ce, Sr, V, and one or more combinations thereof; Q may be selected from among Ti, Mo, Mn, and one or more combinations thereof; Z may be selected from among Cr, V, Fe, Sc, Y, and one or more combinations thereof; and J may be selected from among V, Cr, Mn, Co, Ni, Cu, and one or more combinations thereof.

In one or more embodiments, the aforementioned compounds may have a coating layer on the surface, or may be mixed with another compound having a coating layer. The coating layer may include at least one coating element compound selected from among an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or any mixture thereof. The coating process may include any process as long as it does not cause any side effects on the properties of the positive active material (e.g., spray coating, dipping), which is well suitable (known) to persons having ordinary skill in the art, so a detailed description thereof is not provided for conciseness.

In the positive electrode, an amount of the positive active material may be about 90 wt% to about 98 wt% based on a total weight of the positive active material layer.

In one or more embodiments, the positive active material layer may further include a binder and a conductive material. In these embodiments, an amount of the binder and the conductive material may each be about 1 wt% to about 5 wt%, based on a total weight of the positive active material layer.

The binder improves binding properties of positive active material particles with one another and with the positive electrode current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but embodiments of the present disclosure are not limited thereto.

The conductive material is utilized to impart conductivity to the electrode, and any material may be utilized as long as it does not cause chemical change in the battery to be configured and is an electron conductive material. Non-limiting examples of the conductive material may include a carbon-based material such as natural graphite, artificial graphite, carbon black, acetylene black, ketjen black, a carbon fiber, and/or the like; a metal-based material of a metal powder or a metal fiber including copper, nickel, aluminium, silver, and/or the like; a conductive polymer such as a polyphenylene derivative; or any mixture thereof.

The positive electrode current collector may be an aluminium foil, a nickel foil, or a combination thereof, but embodiments of the present disclosure are not limited thereto.

The positive active material layer and the negative active material layer may be formed by mixing a respective active material, a binder, and optionally a conductive material in a solvent to prepare each active material composition, and applying the active material composition to a current collector. Because such a method for forming an active material layer is widely suitable (known) in the art, a detailed description thereof will not be provided herein. The solvent may include N-methyl pyrrolidone and/or the like, but embodiments of the present disclosure are not limited thereto. In some embodiments, if (e.g., when) an aqueous binder is utilized for the negative active material layer, water may be utilized as a solvent to prepare the negative active material composition.

The separator may be present between the positive electrode and the negative electrode. Such a separator may include polyethylene, polypropylene, polyvinylidene fluoride, or a multi-layer thereof such as a polyethylene/polypropylene double-layered separator, a polyethylene/polypropylene/polyethylene triple-layered separator, and/or a polypropylene/polyethylene/polypropylene triple-layered separator.

The electrolyte may include a non-aqueous organic solvent and a lithium salt.

The non-aqueous organic solvent serves as a medium for transmitting ions taking part in the electrochemical reaction of a battery.

The non-aqueous organic solvent may be a carbonate-based solvent, an ester-based solvent, an ether-based solvent, a ketone-based solvent, an alcohol-based solvent, and/or an aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, propyl propionate, decanolide, mevalonolactone, caprolactone, and/or the like. The ether-based solvent may include dibutyl ether, tetraglyme, diglyme, dimethoxyethane, 2-methyltetrahydrofuran, tetrahydrofuran, and/or the like. In some embodiments, the ketone-based solvent may include cyclohexanone, and/or the like. The alcohol-based solvent may include ethyl alcohol, isopropyl alcohol, and/or the like, and non-limiting examples of the aprotic solvent may include nitriles such as R-CN (where R may be a C2 to C20 linear, branched, or cyclic hydrocarbon, and may include a double bond, an aromatic ring, and/or an ether bond), amides such as dimethylformamide, dioxolanes such as 1,3-dioxolane, sulfolanes, and/or the like.

The non-aqueous organic solvent may be utilized alone or in a mixture of one or more. If (e.g., when) the organic solvent is utilized in a mixture, a mixing ratio may be controlled or selected in accordance with a desirable battery performance.

In some embodiments, the carbonate-based solvent may be prepared by mixing a cyclic carbonate and a linear carbonate. The cyclic carbonate and linear carbonate are mixed together in a volume ratio of about 1:1 to about 1:9. If (e.g., when) the mixture is utilized as an electrolyte, it may have enhanced performance.

In some embodiments, if (e.g., when) the non-aqueous organic solvent is mixed and utilized, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be utilized. The propionate-based solvent may be methyl propionate, ethyl propionate, propyl propionate, or a combination thereof.

In some embodiments, if (e.g., when) the cyclic carbonate and the chain carbonate or the cyclic carbonate and the propionate-based solvent are mixed, they may be mixed in a volume ratio of about 1:1 to about 1:9, and thus performance of an electrolyte may be improved. In some embodiments, if (e.g., when) the cyclic carbonate, the chain carbonate, and the propionate-based solvent are mixed, they may be mixed in a volume ratio of about 1:1:1 to about 3:3:4. The mixing ratio of the solvents may be appropriately adjusted according to desirable properties.

In one or more embodiments, the non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound of Chemical Formula 1.

## Chemical Formula 1

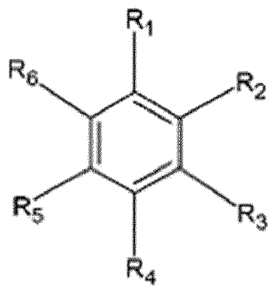

In Chemical Formula 1, $R_1$ to $R_6$ may each independently be the same or different and may be selected from among hydrogen, a halogen, a C1 to C10 alkyl group, a haloalkyl group (e.g., a C1 to C10 haloalkyl group), and one or more combinations thereof.

Non-limiting examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and one or more combinations thereof.

In one or more embodiments, the electrolyte may further include an additive of vinylene carbonate or an ethylene carbonate-based compound of Chemical Formula 2 in order to improve a cycle-life of a battery.

## Chemical Formula 2

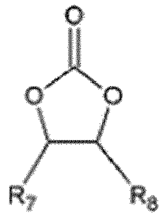

In Chemical Formula 2, $R_7$ and $R_8$ may each independently be the same or different, and may each independently be selected from hydrogen, a halogen, a cyano group (CN), a nitro group ($NO_2$), and a fluorinated C1 to C5 alkyl group, provided that at least one of $R_7$ or $R_8$ is selected from among a halogen, a cyano group (CN), a nitro group ($NO_2$), and a fluorinated C1 to C5 alkyl group, and $R_7$ and $R_8$ are not all hydrogen.

Non-limiting examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, and/or fluoroethylene carbonate. An amount of the additive for improving a cycle-life may be utilized within an appropriate or suitable range.

In some embodiments, the electrolyte may further include vinylethylene carbonate, propane sultone, succinonitrile, or any combination thereof, and the amount thereof utilized may be appropriately adjusted.

The lithium salt dissolved in an (non-aqueous) organic solvent supplies a battery with lithium ions, enables a basic operation of a lithium rechargeable battery, and improves transportation of the lithium ions between positive and negative electrodes. Non-limiting examples of the lithium salt may include at least one supporting electrolytic salt selected from among $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$, wherein, x and y are natural numbers, for example an integer in a range of 1 to 20, lithium difluoro(bisoxalato) phosphate, LiCl, LiI, $LiB(C_2O_4)_2$ (lithium bis(oxalato) borate: LiBOB), and lithium difluoro(oxalato) borate (LiDFOB). A concentration of the lithium salt may be in a range of about 0.1 M to about 2.0 M. If (e.g., when) the lithium salt is included at the above concentration range, an electrolyte may have excellent or suitable performance and lithium ion mobility due to optimal or suitable electrolyte conductivity and viscosity.

FIG. 1 shows an exploded perspective view of a rechargeable battery according to one or more embodiments of the present disclosure. A rechargeable battery according to one or more embodiments may be, for example, a cylindrical battery. However, embodiments of the present disclosure are not limited thereto, and may be applied to one or more suitable types (kinds) of batteries such as a prismatic type or kind, a pouch type or kind, and/or the like.

Referring to FIG. 1, a rechargeable battery 100 according to one or more embodiments may include a positive electrode 114, a negative electrode 112 facing the positive electrode 114, a separator 113 between the positive electrode 114 and the negative electrode 112, and an electrode assembly 110 obtained by winding the positive electrode 114, the negative electrode 112, and the separator 113. To an outermost surface of the electrode assembly 110, as shown in FIG. 2, an adhesive tape 130 for a rechargeable battery according to one or more embodiments is attached. In FIG. 2, the adhesive tape 130 for a rechargeable battery is shown as being attached to the entire circumference of the electrode assembly 110 but is not limited thereto, for example, may be attached only to the ends of the electrodes. The electrode assembly 110 is housed with an electrolyte impregnating the electrode assembly 110 into a case 120, and a sealing member 140 sealing the case 120 is provided at the top of the case 120.

Hereinafter, examples of the present disclosure and comparative examples are described. These examples, however, are not in any sense to be interpreted as limiting the scope of the present disclosure.

### Manufacture of Substrate

In the following Examples and Comparative Examples, examples for controlling a copolymerization ratio of the repeating unit are presented. The copolymerization ratio of a repeating unit may be obtained by controlling the amount of a monomer utilized for the repeating unit, and this ratio may be provided as mol% of the monomer utilized for the repeating unit relative to a total weight of all monomers for a copolymer.

### Example 1

In an autoclave, 60 g of vinylidene fluoride, 10 g of hexafluoropropylene (HFP), and 0.2 g of maleic acid were mixed with benzoyl peroxide as a radical initiator and then, heated and stirred. The mixed solution was then mixed with cyclohexane, a poor solvent, to precipitate a copolymer with a weight average molecular weight of 300,000 g/mol. The copolymer was dissolved in N-methyl-2-pyrrolidone (NMP) to prepare a composition for forming a substrate. The obtained

composition for forming a substrate was coated on a glass plate and dried at 120 °C for 12 hours to prepare a substrate film. On the obtained substrate film, 95 parts by weight of a solution prepared by dissolving an acryl-based resin as an adhesive and 5 parts by weight of a solution prepared utilizing an isocyanate-based cross-linking agent were applied and dried at 120 °C for 20 minutes to form an adhesive layer with a thickness of 10 μm after the drying. As a result, an adhesive tape for a rechargeable battery with the adhesive layer on the substrate film was manufactured.

**Example 2**

A substrate was manufactured in substantially the same manner as in Example 1 except that the copolymerization ratio (e.g., copolymerization amount) of hexafluoropropylene (HFP) was changed to 12 mol%.

**Example 3**

A substrate was manufactured in substantially the same manner as in Example 1 except that the copolymerization ratio (e.g., copolymerization amount) of hexafluoropropylene (HFP) was changed to 16 mol%.

**Example 4**

A substrate was manufactured in substantially the same manner as in Example 1 except that the copolymerization ratio (e.g., copolymerization amount) of hexafluoropropylene (HFP) was changed to 20 mol%.

**Example 5**

A substrate was manufactured in substantially the same manner as in Example 1 except that the copolymerization ratio (e.g., copolymerization amount) of hexafluoropropylene (HFP) was changed to 25 mol%.

**Example 6**

A substrate was manufactured in substantially the same manner as in Example 1 except that the copolymerization ratio (e.g., copolymerization amount) of maleic acid was changed to 0.05 mol%.

**Example 7**

A substrate was manufactured in substantially the same manner as in Example 1 except that the copolymerization ratio (e.g., copolymerization amount) of maleic acid was changed to 0.1 mol%.

**Example 8**

A substrate was manufactured in substantially the same manner as in Example 1 except that the copolymerization ratio (e.g., copolymerization amount) of maleic acid was changed to 0.5 mol%.

**Example 9**

A substrate was manufactured in substantially the same manner as in Example 1 except that the copolymerization ratio (e.g., copolymerization amount) of maleic acid was changed to 1 mol%.

**Example 10**

A substrate was manufactured in substantially the same manner as in Example 1 except that the copolymerization ratio (e.g., copolymerization amount) of maleic acid was changed to 2 mol%.

**Example 11**

A substrate was manufactured in substantially the same manner as in Example 1 except that the copolymerization ratio (e.g., copolymerization amount) of maleic acid was changed to 2.5 mol%.

**Example 12**

A substrate was manufactured in substantially the same manner as in Example 1 except that monomethyl maleate (maleic acid monomethyl ester) was utilized instead of the maleic acid.

**Example 13**

A substrate was manufactured in substantially the same manner as in Example 1 except that acrylic acid was utilized instead of the maleic acid.

**Example 14**

A substrate was manufactured in substantially the same manner as in Example 1 except that the copolymerization was performed by additionally adding chlorotrifluoroethylene (CTFE) in a copolymerization ratio (e.g., copolymerization amount) of 0.1 mol%.

**Example 15**

A substrate was manufactured in substantially the same manner as in Example 1 except that the copolymerization was performed by additionally adding tetrafluoroethylene (TFE) in a copolymerization ratio (e.g., copolymerization amount) of 0.1 mol%.

**Example 16**

A substrate was manufactured in substantially the same manner as in Example 1 except that the copolymerization was performed by additionally adding ethylene in a copolymerization ratio (e.g., copolymerization amount) of 0.1 mol%.

**Example 17**

A substrate was manufactured in substantially the same manner as in Example 1 except that the copolymerization was performed by additionally adding ethyl acrylate in a copolymerization ratio (e.g., copolymerization amount) of 0.1 mol%.

**Comparative Example 1**

A substrate was manufactured in substantially the same manner as in Example 1 except that a vinylidene fluoride homopolymer (polyvinylidene fluoride, PVDF) was utilized instead of the copolymer of Example 1.

**Comparative Example 2**

A substrate was manufactured in substantially the same manner as in Example 1 except that the copolymerization ratio (e.g., copolymerization amount) of hexafluoropropylene (HFP) was changed to 5 mol%.

**Comparative Example 3**

A substrate was manufactured in substantially the same manner as in Example 1 except that the copolymerization ratio (e.g., copolymerization amount) of hexafluoropropylene (HFP) was changed to 5 mol%, and the third monomer was not included.

Table 1 shows that the monomers and the copolymerization ratios utilized in the examples and the comparative examples. Referring to Table 1, vinylidene fluoride was utilized in a copolymerization ratio (e.g., copolymerization amount) excluding the copolymerization ratios (e.g., copolymerization amounts) of the monomers described in the table based on 100 mol% of the entire copolymerization ratio (a total copolymerization amount).

Table 1

| | Copolymerizatio n ratio (mol%) of second monomer (HFP) | Third monomer | | Fourth monomer | |
|---|---|---|---|---|---|
| | | Material | Copolymerizatio n ratio (mol%) | Materia l | Copolymerizatio n ratio (mol%) |
| Comparative Example 1 | 0 | None | - | None | - |
| Comparative Example 2 | 5 | maleic acid | 0.2 | None | - |
| Comparative Example 3 | 5 | None | - | None | - |
| Example 1 | 7 | maleic acid | 0.2 | None | - |
| Example 2 | 12 | maleic acid | 0.2 | None | - |
| Example 3 | 16 | maleic acid | 0.2 | None | - |
| Example 4 | 20 | maleic acid | 0.2 | None | - |
| Example 5 | 25 | maleic acid | 0.2 | None | - |
| Example 6 | 7 | maleic acid | 0.05 | None | - |
| Example 7 | 7 | maleic acid | 0.1 | None | - |
| Example 8 | 7 | maleic acid | 0.5 | None | - |
| Example 9 | 7 | maleic acid | 1 | None | - |
| Example 10 | 7 | maleic acid | 2 | None | - |
| Example 11 | 7 | maleic acid | 2.5 | None | - |
| Example 12 | 7 | maleic acid monometh yl ester | 0.2 | None | - |
| Example 13 | 7 | acrylic acid | 0.2 | None | - |
| Example 14 | 7 | maleic acid | 0.2 | CTFE | 0.1 |
| Example 15 | 7 | maleic acid | 0.2 | TFE | 0.1 |
| Example 16 | 7 | maleic acid | 0.2 | ethylen e | 0.1 |
| Example 17 | 7 | maleic acid | 0.2 | ethyl acrylat e | 0.1 |

**Evaluation and Measurement Methods**

**-Melting point**

A melting point was measured by utilizing a differential scanning calorimeter (DSC) within a temperature range of -80 °C to 200 °C at a temperature increasing rate of 10 °C/min.

**-Electrolyte absorption amount**

An electrolyte absorption amount was evaluated according to ISO 1817. An electrolyte solution (i.e., electrolyte) was prepared by dissolving 1.0 mol/kg of $LiPF_6$ as a lithium salt in a mixed solution of propylene carbonate (PC): ethylene carbonate (EC): ethylmethyl carbonate (EMC) in a weight ratio of 2:2:6. An absorption amount thereof was measured as a weight change rate before and after immersing a film specimen (substrate) punched into a circle with a diameter of 20 mm at a temperature 60 °C for 24 hours. Herein, the absorption amount, which was 50% or more, was evaluated as excellent or suitable.

- **Adhesion**

Adhesion was evaluated as follows according to ISO 6922:1987.

A 30 mm wide X 50 mm long adhesive tape for a rechargeable battery was attached to a 15 μm-thick Al foil (A1100-H18), and another sheet of an Al foil was placed on a substrate of the tape. The specimen was immersed in the electrolyte solution utilized for measuring the electrolyte absorption amount and then, stored at a temperature of 60 °C for 24 hours. After the immersion, the specimen was cut to have a width of 15 mm to conduct a tensile test (tensile speed: 100 mm/min). An average peeling force in a peeling section of a Stress-Strain curve (S-S curve) was taken as the adhesion. The larger adhesion was evaluated as more excellent or suitable.

**-Strain rate**

A strain rate was evaluated as described below. The adhesive tape for a rechargeable battery was immersed (60 °C and 24 hr) in the electrolyte solution utilized for measuring the electrolyte absorption amount to measure a thickness before and after the immersion by utilizing a micrometer and then, calculate the strain rate.

$$\text{Strain rate} = (\text{thickness before deformation} - \text{thickness after deformation}) / (\text{thickness before deformation}) \times 100\ (\%)$$

Herein, the thickness was measured by utilizing a micrometer with a tip spindle diameter of Φ 6.35 mm (MDH-25MB, Mitutoyo Corp.). The micrometer was utilized under a measurement load of 7 N. The larger strain rate was evaluated as more excellent or suitable.

The evaluation results are shown in Table 2.

Table 2

| | Melting point °C | Electrolyte absorption amount % | Adhesion mN/15 mm | Substrate strain rate % |
|---|---|---|---|---|
| Comparative Example 1 | 173 | 45 | 15 | 5 |
| Comparative Example 2 | 158 | 140 | 200 | 35 |
| Comparative Example 3 | 163 | 120 | 110 | 26 |
| Example 1 | 150 | 280 | 240 | 59 |
| Example 2 | 140 | 370 | 260 | 76 |
| Example 3 | 132 | 480 | 240 | 88 |
| Example 4 | 117 | 610 | 220 | 95 |
| Example 5 | 85 | dissolved | 3500 | 100 |
| Example 6 | 155 | 210 | 160 | 41 |
| Example 7 | 152 | 250 | 180 | 50 |
| Example 8 | 144 | 330 | 350 | 60 |
| Example 9 | 132 | 420 | 390 | 62 |
| Example 10 | 122 | 580 | 460 | 68 |
| Example 11 | 101 | 680 | 500 | 71 |
| Example 12 | 147 | 390 | 180 | 61 |
| Example 13 | 152 | 210 | 150 | 49 |
| Example 14 | 148 | 280 | 240 | 62 |

(continued)

| | Melting point °C | Electrolyte absorption amount % | Adhesion mN/15 mm | Substrate strain rate % |
|---|---|---|---|---|
| Example 15 | 148 | 270 | 220 | 61 |
| Example 16 | 146 | 250 | 230 | 57 |
| Example 17 | 143 | 340 | 250 | 64 |

As shown in Table 2, Comparative Example 1 including no second and third monomers exhibited too high a melting point, a small electrolyte absorption amount, and a low substrate strain rate. If (e.g., when) applied to an electrode assembly, no effect of preventing or reducing cracks was obtained. In some embodiments, because Comparative Example 1 also exhibited low adhesion, there occurred slippage between the electrode assembly and the case. Furthermore, if (e.g., when) the second monomer was utilized in a low ratio as in Comparative Examples 2 and 3, no sufficient gelling was achieved due to a low melting point and a low substrate strain rate, which resulted in obtaining no effect of preventing or reducing cracks. In some embodiments, Comparative Example 3, which included no third monomer, exhibited low adhesion.

In contrast, the Examples each exhibited a high substrate strain rate, which confirmed that a substrate sufficiently absorbed an electrolyte and thus was sufficiently swollen and softened, and also, excellent or suitable adhesion.

As utilized herein, the singular forms, "a," "an," and "the" are intended to include the plural forms as well, unless the context clearly indicates otherwise. Further, the utilization of "may" when describing embodiments of the present disclosure refers to "one or more embodiments of the present disclosure".

As utilized herein, the terms "and," "or," and "and/or" may include any and all combinations of one or more of the associated listed items. Expressions such as "at least one of," "one of," and "selected from among," when preceding a list of elements, modify the entire list of elements and do not modify the individual elements of the list. For example, "at least one of a, b, or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

As utilized herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

The battery module, battery pack, battery management system, electric vehicle, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While the present disclosure has been described in connection with what is presently considered to be practical example embodiments, it is to be understood that the present disclosure is not limited to the disclosed embodiments, but, on the contrary, is intended to cover one or more suitable modifications and equivalent arrangements included within

the scope of the appended claims and equivalents thereof.

**Reference Numerals:**

100: rechargeable battery
110: electrode assembly
112: negative electrode
113: separator
114: positive electrode
120: case
130: adhesive tape for a rechargeable battery
140: sealing member

**Claims**

1. An adhesive tape for a rechargeable battery, the adhesive tape comprising

    a substrate; and
    an adhesive layer on a side of the substrate,
    wherein the substrate comprises
    a copolymer comprising

        a first structural unit derived from a first monomer comprising fluorine,
        a second structural unit derived from a second monomer different from the first monomer and comprising fluorine, and
        a third structural unit derived from a third monomer that is a carboxyl-containing monomer.

2. The adhesive tape for a rechargeable battery as claimed in claim 1, wherein the second structural unit is comprised in an amount of about 7 mol% to about 40 mol% based on a total weight of the copolymer.

3. The adhesive tape for a rechargeable battery as claimed in claim 2, wherein the third structural unit is comprised in an amount of about 0.05 mol% to about 2.5 mol% based on the total weight of the copolymer.

4. The adhesive tape for a rechargeable battery as claimed in any one of claims 1 to 3, wherein the first monomer is vinylidene fluoride.

5. The adhesive tape for a rechargeable battery as claimed in any one of claims 1 to 4, wherein the second monomer is hexafluoropropylene.

6. The adhesive tape for a rechargeable battery as claimed in any one of claims 1 to 5, wherein the third monomer comprises (meth)acrylic acid or a derivative thereof, maleic acid or a derivative thereof, vinyl benzoic acid or a derivative thereof, an anhydride thereof, or a combination thereof.

7. The adhesive tape for a rechargeable battery as claimed in claim 6, wherein the third monomer comprises at least one selected from among maleic acid, maleic anhydride, maleic acid monoester, maleic acid monoamide, acrylic acid, methacrylic acid, and 4-vinyl benzoic acid.

8. The adhesive tape for a rechargeable battery as claimed in any one of claims 1 to 7, wherein the copolymer further comprises a fourth structural unit derived from a fourth monomer selected from among an ethylene fluoride derivative, an acrylic acid derivative, and an ethylene derivative.

9. The adhesive tape for a rechargeable battery as claimed in claim 8, wherein the fourth monomer comprises at least one selected from among chlorotrifluoroethylene, tetrafluoroethylene, perfluoroalkyl vinyl ether, acrylic acid ester, ethylene, propylene, vinyl acetate, and maleic acid diester.

**10.** The adhesive tape for a rechargeable battery as claimed in claim 8 or claim 9, wherein the fourth structural unit is comprised in an amount of about 0.05 mol% to about 0.15 mol% based on a total weight of the copolymer.

**11.** The adhesive tape for a rechargeable battery as claimed in any one of claims 1 to 10, wherein a melting point of the copolymer is greater than or equal to about 40 °C and less than or equal to about 155 °C.

**12.** The adhesive tape for a rechargeable battery as claimed in any one of claims 1 to 11, wherein an electrolyte absorption amount of the substrate is greater than or equal to about 50 wt% of a weight of the substrate.

**13.** The adhesive tape for a rechargeable battery as claimed in any one of claims 1 to 12, wherein the adhesive layer comprises an adhesive selected from among an acrylic adhesive, a rubber adhesive, a silicone adhesive, a hot melt adhesive, and combinations thereof.

**14.** A rechargeable battery, comprising

an electrode assembly comprising

a negative electrode,
a positive electrode, and
a separator between the negative electrode and the positive electrode;

an electrolyte in which the electrode assembly is immersed;
a case accommodating the electrode assembly and the electrolyte; and
the adhesive tape for the rechargeable battery of any one of claim 1 to claims 13 attached to the electrode assembly and arranged between the electrode assembly and the case.

FIG. 1

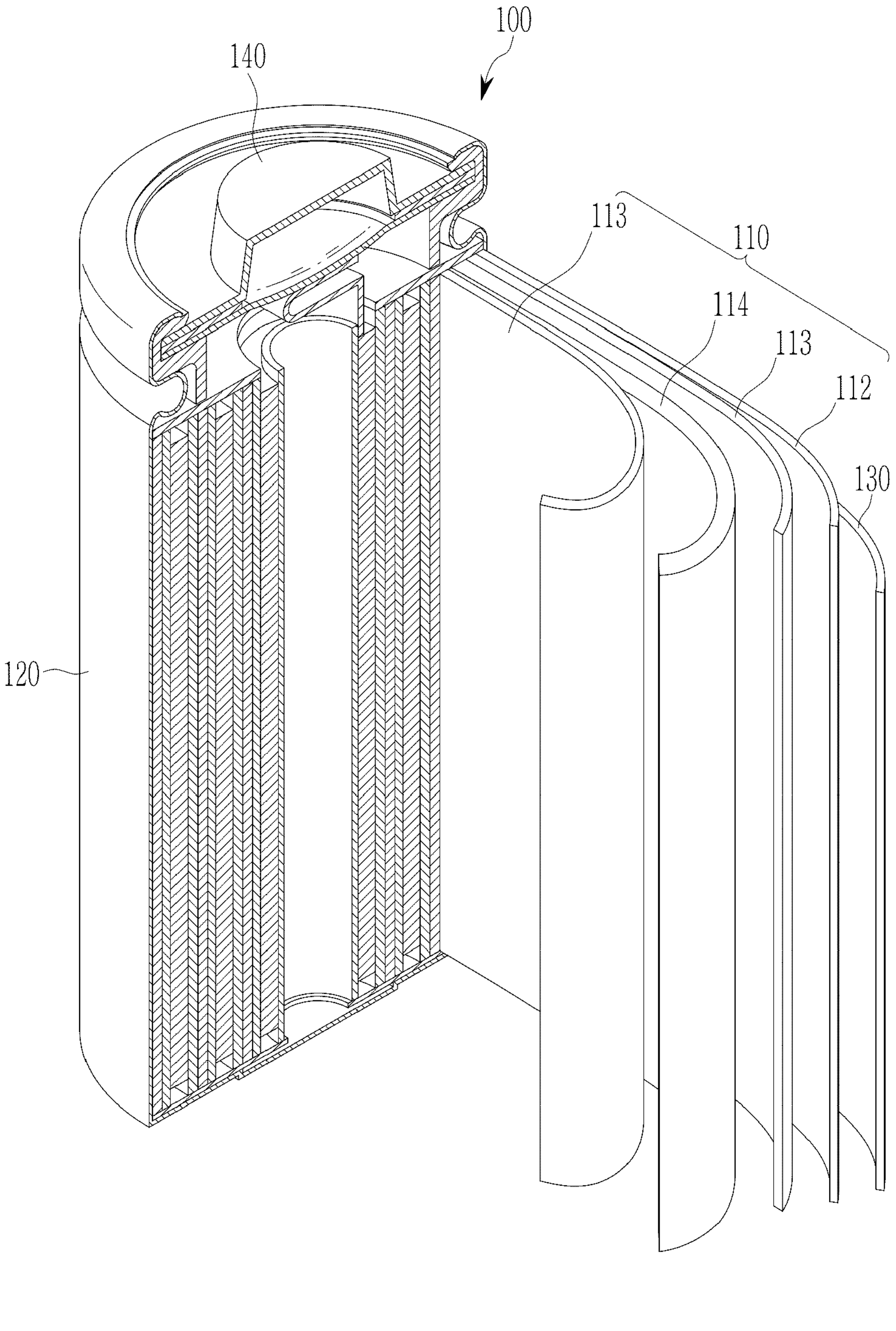

FIG. 2

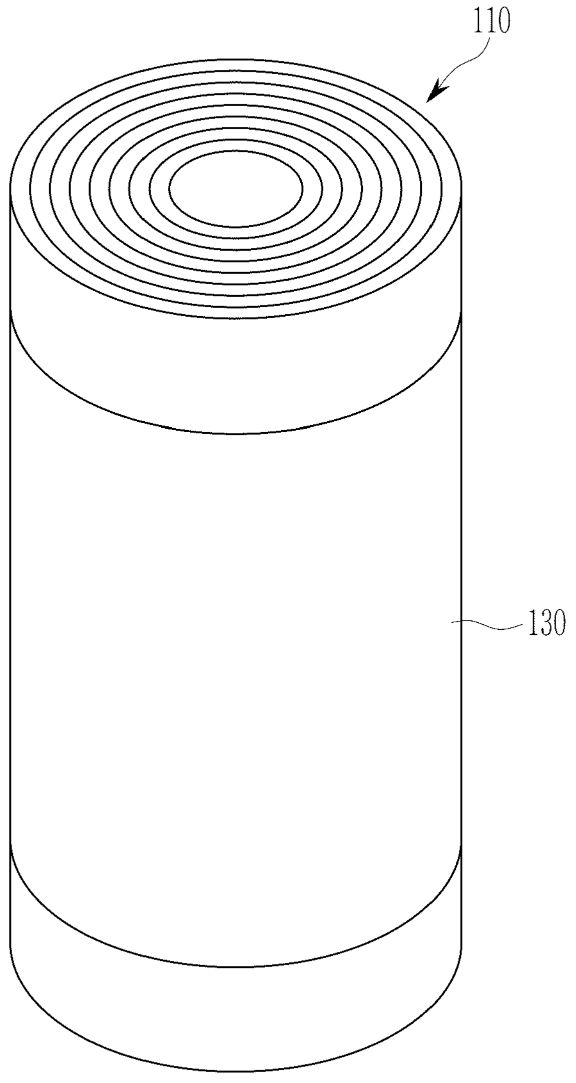

Europäisches Patentamt
European Patent Office
Office européen des brevets

# EUROPEAN SEARCH REPORT

Application Number
EP 24 16 4001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/243862 A1 (HOSODA KAZUKI [JP] ET AL) 30 July 2020 (2020-07-30) * paragraphs [0009] - [0019], [0154], [0155], [0206]; claims 1-9 * * paragraphs [0267] - [0279] * | 1-14 | INV. C09J7/24 |
| Y | US 2022/213359 A1 (KAWABE SHIGEKI [JP]) 7 July 2022 (2022-07-07) * paragraph [0076]; claims 1-13 * | 1-14 | |
| Y | US 2012/270036 A1 (KIUCHI KAZUYUKI [JP] ET AL) 25 October 2012 (2012-10-25) * paragraphs [0051], [0063]; claims 1-5 * | 1-14 | |
| A | US 2015/349309 A1 (ABUSLEME JULIO A [IT] ET AL) 3 December 2015 (2015-12-03) * paragraphs [0046], [0134]; claims 1-20 * | 1-14 | |

TECHNICAL FIELDS SEARCHED (IPC)

C09J
H01M
C08F

The present search report has been drawn up for all claims

1

| Place of search | Date of completion of the search | Examiner |
|---|---|---|
| Munich | 31 July 2024 | Alevizopoulou, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 16 4001

This annex lists the patent family members relating to the patent documents cited in the above-mentioned European search report. The members are as contained in the European Patent Office EDP file on
The European Patent Office is in no way liable for these particulars which are merely given for the purpose of information.

31-07-2024

| Patent document cited in search report | Publication date | Patent family member(s) | Publication date |
|---|---|---|---|
| US 2020243862 A1 | 30-07-2020 | CN 111194495 A | 22-05-2020 |
| | | EP 3680969 A1 | 15-07-2020 |
| | | JP 6863470 B2 | 21-04-2021 |
| | | JP WO2019087652 A1 | 09-07-2020 |
| | | KR 20200079516 A | 03-07-2020 |
| | | TW 201923003 A | 16-06-2019 |
| | | US 2020243862 A1 | 30-07-2020 |
| | | WO 2019087652 A1 | 09-05-2019 |
| US 2022213359 A1 | 07-07-2022 | CN 114096631 A | 25-02-2022 |
| | | EP 3960827 A1 | 02-03-2022 |
| | | US 2022213359 A1 | 07-07-2022 |
| | | WO 2020218362 A1 | 29-10-2020 |
| US 2012270036 A1 | 25-10-2012 | CN 102746800 A | 24-10-2012 |
| | | CN 102746801 A | 24-10-2012 |
| | | CN 202246521 U | 30-05-2012 |
| | | EP 2514793 A1 | 24-10-2012 |
| | | EP 2514794 A1 | 24-10-2012 |
| | | KR 20120119956 A | 01-11-2012 |
| | | US 2012270036 A1 | 25-10-2012 |
| | | US 2012270042 A1 | 25-10-2012 |
| US 2015349309 A1 | 03-12-2015 | AU 2013361732 A1 | 18-06-2015 |
| | | CA 2894209 A1 | 26-06-2014 |
| | | CN 105073839 A | 18-11-2015 |
| | | EP 2935410 A1 | 28-10-2015 |
| | | JP 6352297 B2 | 04-07-2018 |
| | | JP 2016501950 A | 21-01-2016 |
| | | KR 20150100754 A | 02-09-2015 |
| | | US 2015349309 A1 | 03-12-2015 |
| | | WO 2014095907 A1 | 26-06-2014 |

EPO FORM P0459

For more details about this annex : see Official Journal of the European Patent Office, No. 12/82